# EUROPEAN PATENT SPECIFICATION

(11) **EP 0 436 887 B1**
(45) Date of publication and mention of the grant of the patent: **13.03.1996**
(21) Application number: 90124608.2
(22) Date of filing: 18.12.1990
(51) Int. Cl.: G05B 19/18

(54) **A numerical control unit**
Numerische Steuereinheit
Organe de commande numérique

(30) Priority: 08.01.1990 JP 1293/90
(43) Date of publication of application: 17.07.1991
(73) Proprietor: MITSUBISHI DENKI KABUSHIKI KAISHA, Tokyo 100 (JP)
(72) Inventor: Imanishi, Kazuo, c/o Mitsubishi Denki K.K., Higashi-ku, Nagoya-shi, Aichi (JP)
(74) Representative: Sajda, Wolf E., Dipl.-Phys.

(56) References cited:
- DD-A- 266 864
- DE-A- 2 910 399
- DE-A- 2 925 902
- DE-A- 3 229 988
- DE-A- 3 512 513
- US-A- 4 794 311

## Description

The invention relates to a numerical controller operative in response to control program commands for controlling movement of a first device in synchronism with a second device not controlled by the numerical controller, the controller comprising means for detecting the speed and position of at least one element of the second device, and means for controlling the speed and position of at least one element of the first device in synchronism with the at least one element of the second device.

A numerical controller of this type is known, for example, from DE-A1-29 10 399. In the conventional numerical controller, an absolute angular step detector is provided from which directly coded position signals of a ram plunger of a press are continuously supplied to a converter on the one hand and a follow-up control on the other hand. In the converter, a curve is simulated corresponding to the respective position signals, wherein the shape of the curve can be freely selected and represents an exact electronic reproduction of an actual mechanic curve. This curve determines the characteristic of movement of an automation device, in particular a conveying device, during the operation of the press. However, if the press is not operated continuously, then it is the follow-up control which supplies during shut-down periods of the press an electronic curve which determines the characteristic of movement of the conveying device. If the curve is to be changed or other operating conditions are desired, this is accomplished by changing the program, for example by changing the program cassette in the device of DE-A1-29 10 399. In the conventional device, no means are provided for changing the operation mode during operation. Also, no processing means are provided by means of which the speed of synchronization can be varied during operation.

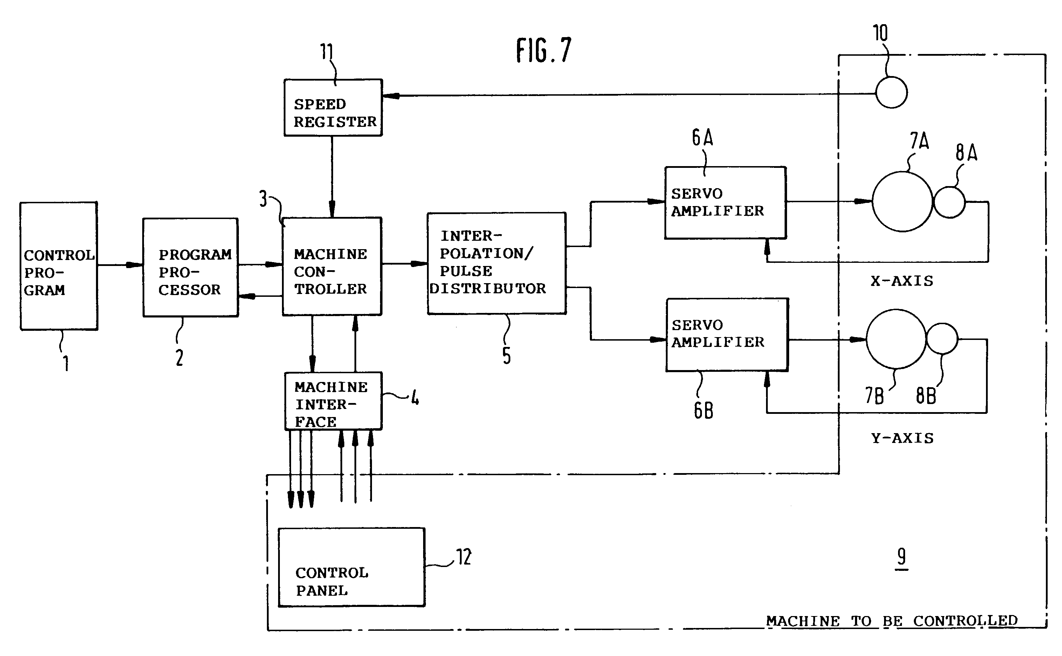

Figure 7 is a functional block diagram illustrating a conventional numerical control unit. In Figure 7, a control program 1, organized as blocks of instructions, is provided to a program processor 2 which will read the control program 1, decode its data, and create control command data. A machine controller 3 receives control command data from the program processor 2 and is in communication with an interface 4 to the machine 9 (indicated schematically by dashed lines) that is being controlled. The controller 3 is operative to control start-up of the program processor 2 in accordance with a control signal from the machine interface 4, receive detected rotational speed data, add execution speed data to the control command data, and generate output command data. Also connected to the machine controller for receiving output command data from the controller is an interpolation/pulse distributor 5 for distributing direction signals for directing movement along each of two orthogonal axes, in accordance with the control command data. the direction signals are received by X-axis and Y-axis servo amplifiers 6A and 6B, respectively, for driving corresponding servo motors 7A and 7B according to the control command data. The linear position of the machine 9 is identified by an X-axis detector (pulse generator) 8A and a Y-axis detector (pulse generator) 8B and the position information is fed back to the corresponding servo amplifier 6A, 6B.

The system also includes another machine (not shown) which is not controlled by the control program 1, but which may also operate in some fashion on the workpiece. Information on the operation of this machine, for example the speed with which a part of the machine moves in the system, is identified by a detector (pulse generator) 10, which produces pulses in relation to the movement of that device by a predetermined distance or angle of rotation in a given time span. The detected speed value is placed in a speed register 11 for subsequent reading by the machine controller 3. A control panel 12 is located on the machine 9 for controlling operation of the machine 9.

In operation, when a machine operation START signal is entered into the machine controller 3 through the machine interface 4, the machine controller 3 causes the program processor 2 to begin reading the control program 1. the program processor 2 reads the control program 1 in order on a block-by-block basis, starting at the beginning thereof, and decodes the program instructions. The program processor 2 then converts the decoded control program 1 into an integral processing data structure, creates control command data, and outputs that control command data to the machine controller 3. In response to the control command data, the controller 3 generates machine ON-OFF control signals that are output to the machine 9 to be controlled,via the machine interface 4. The controller 3 also generates axis control data that is output to the interpolation/pulse distributor 5 as X-axis and Y-axis control commands. The axis control commands are limited by established execution control speeds, based on execution speed data (override) sent by the external control panel 12 via the machine interface 4. Thus, the machine controller 3 is capable of executing the entire numerical control function for machine 9 in accordance with operation control signals from a processor or an operator.

The interpolation/pulse distributor 5 may employ linear or circular interpolation and can control acceleration/deceleration in accordance with the axis control commands and the execution speed data. the interpolation/pulse distributor 5 distributes and outputs control signals to the servo amplifiers 6A and 6B. The servo amplifiers direct machine movement along the X- and Y-axes, according to the control program 1, by controlling the positions and speeds of the servo motors 7A, 7B in accordance with the control signals of the corresponding axes and the feedback signals generated by the corresponding detectors 8A and 8B.

In addition to the aforementioned general numerical control operation, control can be carried out in synchronism with movement of the external machine element or system. The speed register 11, which stores a detection signal (pulse train signal) from the detector 10 in the external system, reads the pulse train signal at predetermined intervals and stores the read signal serially as speed data. If the control program 1 contains an instruction for the conduct of a synchronized machine 9/external machine operation, the program processor 2 decodes that instruction and provides an appropriate command to the machine controller 3. When synchronized control is to be performed, the machine controller 3 reads the speed data of the speed register 11 serially at predetermined intervals, calculates the appropriate execution speeds for the axis control commands in accordance with the most recent speed data, and outputs the appropriate control commands to the interpolation/pulse distributor 5. Through the above operation, control of the machine 9, synchronized with movement in the external system, can be obtained.

However, the conventional numerical control unit will only allow speed synchronization control movements in the external system. For example, the conventional unit can perform only limited synchronized machining of workpieces requiring position control, for example a threading operation on a lathe or a tapping operation on a milling machine. Specifically, the conventional unit cannot be used with a device requiring both position synchronization control and speed synchronization control.

The object underlying the present invention is to provide a numerical controller of the type specified above which permits both position synchronization control and speed synchronization control so that the numerical controller is capable of responding in real time to commands representing a change in the operation mode.

This object is solved in an advantageous manner in a numerical controller of the type as set forth above which is characterized in that the controller further comprises speed and position information storing means for storing the detected speed and position of the element of the second device; means for processing speed and position synchronization commands from a control program; wherein the processing means comprises a synchronization position detector adapted, upon receipt of a position synchronization command, to read the current position of the element from the position information storing means and to start the position controlling means when the current position corresponds to a program-designated value, and wherein the processing means further comprises an actual feed speed processor adapted, upon receipt of the speed synchronization command, to read the current speed of the element from the speed information storing means and to calculate the acutal desired speed of the at least one element of the first device from a program-designated speed and the current speed, the actual feed speed processor being adapted to transmit the calculated actual speed to the speed controlling means.

According to a further development of the controller according to the invention, the means for detecting the speed and position of at least one element of the second device is adapted to output signals to the position and speed information storing means.

In a still further development of the controller according to the invention, the detecting means are adapted to determine the relative direction of movement of the element of the second device.

According to a further development of the controller according to the invention, the position and speed information storing means are responsive to pulses and the detecting means comprises a pulse generator responsive to the movement of the element of the second device.

In a still further development of the controller according to the invention, the position information storing means is selectively resettable at a reference position.

According to the invention, the object is solved in an advantageous manner wherein an interactive operation with greater flexibility is achieved. Depending on the situation and circumstances, the controlled device can be driven in speed synchronization only, position synchronization only or in a combination of both speed and position synchronization control. This increased flexibility opens up a wider range of applicability of the claimed numerical controller.

In the numerical controller according to the invention, if a command from the center program designates speed synchronization, the synchronization control processor reads the speed data for the driven object in the workpiece system from the speed information storage and controls the machine execution speed in order to perform speed synchronization. If the control program has commanded the implementation of position synchronization, the synchronization control processor serially reads the data for the driven object in the external system from the position information storage, compares that data with the command synchronization position, and, on identifying the synchronization position, performs start/stop control of the driver for the machine to be numerically controlled. If both position and speed synchronization are commanded, the above two types of control are processed in parallel to perform position/speed synchronization.

The present invention will now be described by way of example with reference to the accompanying drawings, in which:
Figure 1 is a block diagram of a numerical control unit according to a preferred embodiment of the present invention;
Figure 1A illustrates an external system, here a rotary press, with which the numerically controlled apparatus of the invention is synchronously operated;
Figure 2A illustrates the rotational position of a rotary crank of a press machine and Figure 2B a variation in the vertical position of a die during a pressing operation as the crank rotates;
Figure 3 illustrates an example of a control program usable with the embodiment shown in Figure 1, together with a schematic diagram of the numerically controlled machine;
Figure 4 illustrates the relationship between crank position and X-, Y- axis control commands executed according to the program of Figure 3;
Figure 4A illustrates the synchronization control processor of Fig. 1 in greater detail;
Figure 5 is a processing flowchart for the synchronization control processor used according to the embodiment in Figures 1 and 4A;
Figure 6 is a processing timing chart illustrating speed synchronization control according to the embodiment in Figure 1; and
Figure 7 is a block diagram of a conventional numerical control unit.

In the drawings, the same reference numerals are used throughout to designate like or corresponding parts.

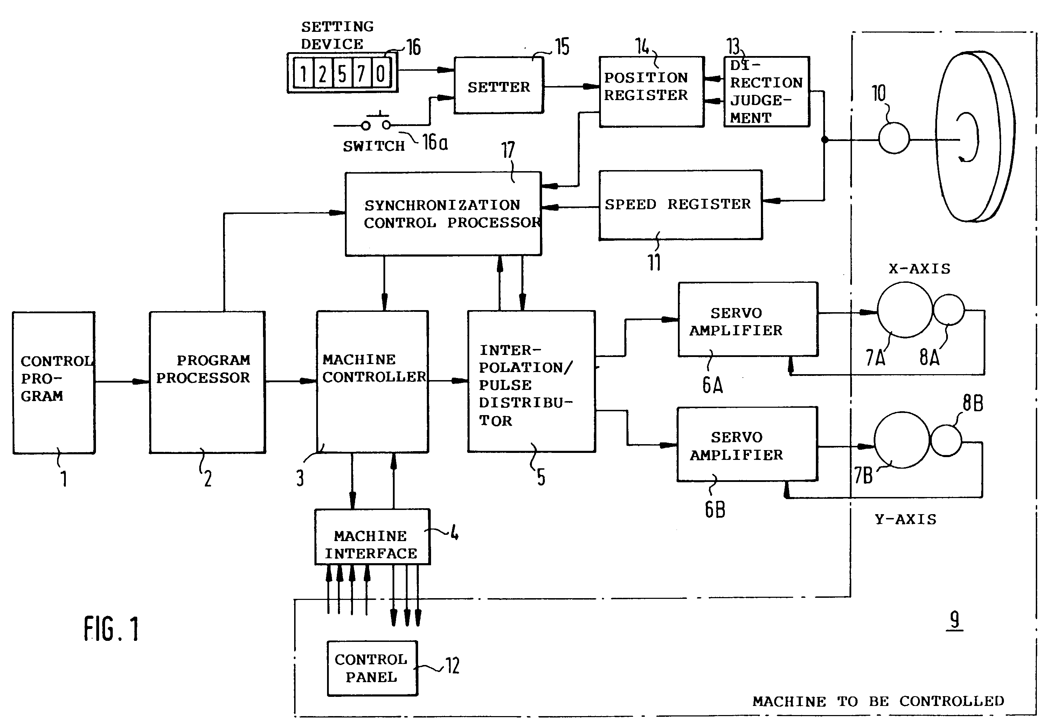

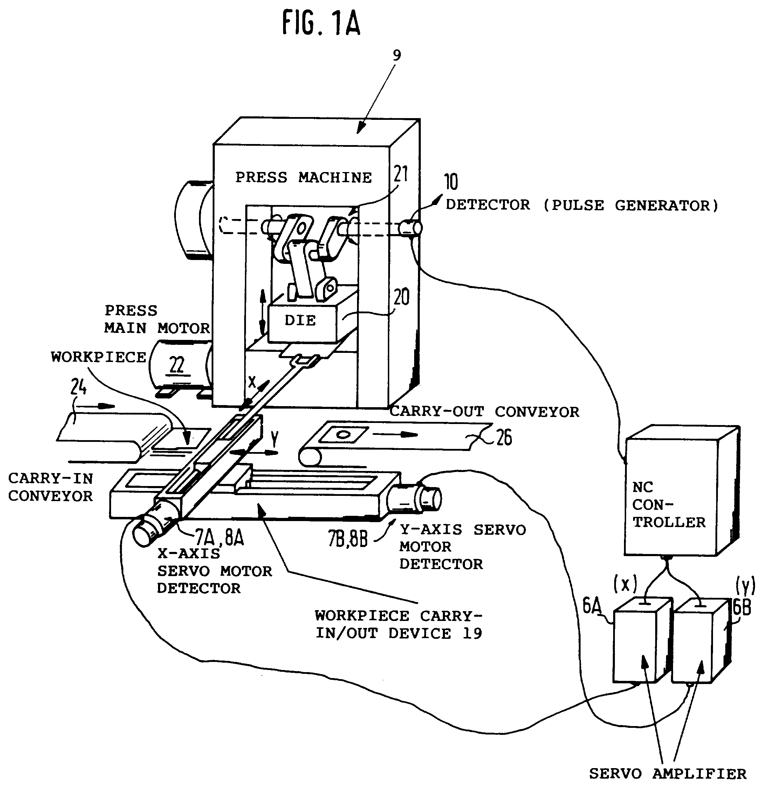

A preferred embodiment of the present invention will now be described using, as an example, workpiece transfer control for a rotary press. Referring to Figure 1, a program 1, stored in memory, on disk, tape or the like, is accessible by a program processor 2, which is connected to a machine controller 3 and a synchronization control processor 17, to be described later. The controller 3 communicates with the processor 17, a machine interface 4, and an interpolation/pulse distributor 5. As previously described with respect to Figure 7, servo amplifiers 6A, 6B receive pulse signals from pulse distribution unit 5 and drive X-axis and Y-axis servo motors 7A and 7B, respectively, using feedback from detectors 8A, 8B for control of the operation of machine 9, which is a press feeder for example. A detector (pulse generator) 10 is directly connected to a driven rotary element of the press, and a speed register 11 detects the speed of rotation of this element. A machine control panel 12 inputs control information for the machine. To this construction the present invention further adds a direction judging device 13 for judging the direction of the detector signal pulse (a two-phase signal). A position register 14 accumulates positive and negative-direction pulses output by the direction judging device 13, and a setter 15 presets position data in the position register 14. The system is completed by a position input device 16 and a reset (clear to zero) switch 16A. The synchronization control processor 17 carries out synchronization control in accordance with data from the speed register 11 and the position register 14 in response to synchronization commands originating from the control program 1.

Figure 1A illustrates one example of an external (non-numerically controlled) system, here a rotary press. The press includes a crank 21 which raises and lowers die 20 for , for example, punching apertures in successive workpieces. At the end of the crank resides the detector 10, which generates pulses in accordance with rotary movement of the crank. the crank and thus the attached die are driven by a motor 22, which is controlled independently of the numerical control (NC) system and the machine 9.

The numerically controlled machine 9 in our example includes a workpiece carry-in and carry-out device 19, including an arm with an attached clamp movable in an X-Y plane. The movement of the arm is controlled by the servo motors 7A, 7B also shown in Figure 1. In operation, the arm will be caused to grasp the workpieces arriving from a carry-in conveyor 24, move the workpieces into position for punching on the lunch, and after punching, retrieve the workpieces and deliver then to a carry-out conveyor 26. Also shown in Figure 1A are the servo amplifiers 6A and 6B, and the remainder of the NC controller, which is shown in more detail in Figure 1.

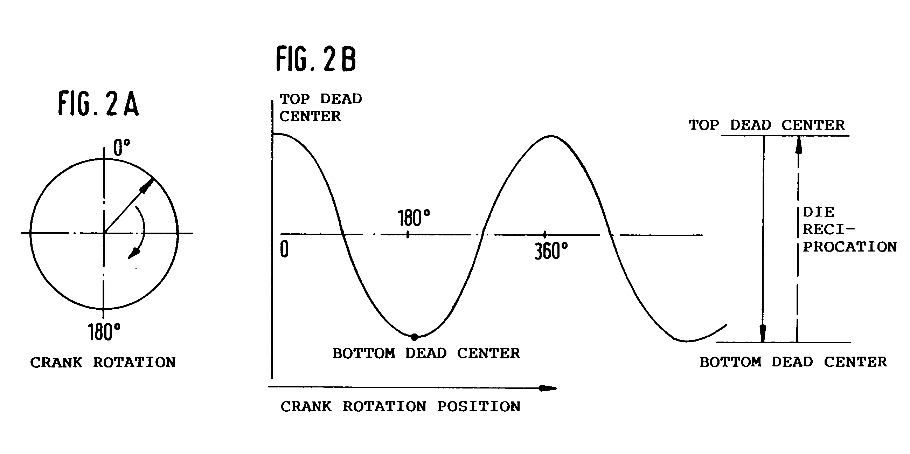

Operation of the preferred embodiment is described with reference to Figures 1, 1A, 2A and 2B. Figure 2A illustrates the variable angular position of the rotary crank 21 of the press and Figure 2B illustrates the relative position of the die 20 as the crank 21 rotates. Referring again to Figure 1, the position register 14 should be reset by the setter 15 so as to be zeroed at a 0° position (top dead centre) of the crank 21. Setting device 16 indicates the value (usually 360° in this example) at which the setter 15 should perform this function. At this position, the die 20 is located at the top dead centre. When the crank 21 rotates, the detector 10 (which may be a synchronous decoder) will generate pulses, e.g., one for each predetermined increment of rotation, and provide then via the direction judgement circuit 13 to the position register 14, which serially accumulates (increments and decrements) a pulse total as an indication of current position (current angular position of the crank 21, which is related to the current height of the die 20).

As the crank 21 rotates, the position of the die 20 varies between top dead centre and bottom dead centre, in a reciprocal manner. The position register 14 is set to 0 by the setter 15 when the angular position reaches 360° (0°) at each rotation. By the above operation, the current rotational position of the rotary crank is stored and serially updated in the position register 14.

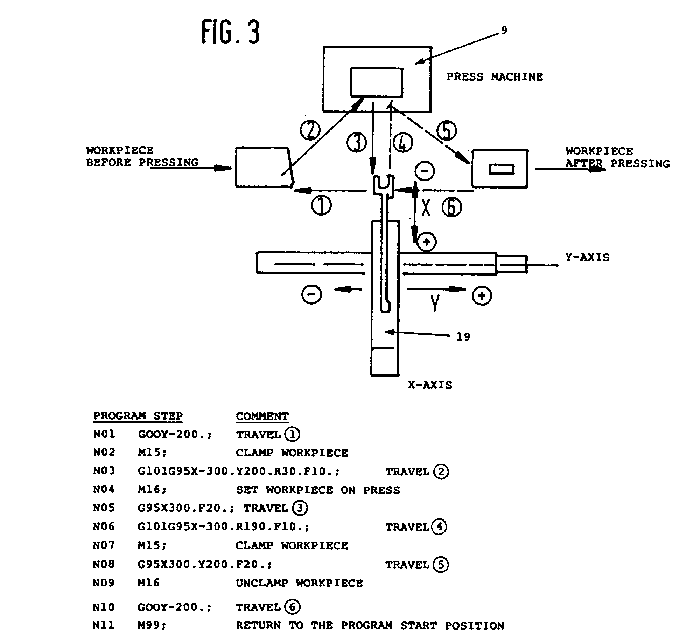

Figure 3 shows an example of a control program illustrating the operation of the present invention. In Figure 3, a schematic diagram of the machine arrangement of Figure 1A is shown in conjunction with a typical NC program. The program illustrated is designed to cause the arm to pick up a workpiece from the carry-in conveyor side, deliver the workpiece to the press, and pick up the pressed workpiece and deliver it to the side of the carry-out conveyor.

Step 1 of the program is a G00 instruction, which commands high speed linear movement. Here, the instruction requires movement in the -Y direction, corresponding to movement "1" shown in Figure 3 (movement to the left to the carry-in station to pick up a workpiece). Step 2 commands operation of the clamp, so that the work will be grasped. Step 3 instructs speed synchronization (G95) as well as positional synchronization (G101) of the next movement with the speed and position of the press, specifically the speed of rotation of the crank 21 and the position of the crank 21, which translates as the position of the die 20. In step 3, the arm with its clamped workpiece will travel along path "2" shown in the upper part of the figure at a synchronised speed F10 (explained hereinafter) beginning at a time when the crank 21 reaches a rotary position of 30° (determined by instruction "R30") from top dead centre. As a result, the workpiece will be delivered to the press as the die 20 is moving down toward the pressing position. It can be easily seen that it is necessary in cases such as the present that the operation of the arm be synchronized positionally with the location of the die 10, as otherwise the workpiece may be inserted too late and may interfere with die movement and/or damage the die 20. The speed of the press and thus the die 20 is not controlled by the numerical controller, and thus it is necessary to adapt the numerical control of the arm to the actual conditions (i.e. the operational speed) of the press, which may be variable. To this end, the speed of operation of the arm is determined by the speed of operation of the press in those cases where speed synchronization is commanded, and the start of operation of the arm is tied in to the position of the crank 21 in cases where positional synchronization is commanded.

In step 4, the workpiece is unclamped, and thus is positioned within the press. Step 5 commands the retraction of the arm away from the press, along path "3" shown in the figure, with speed synchronization (G95) only, at speed F20.

After pressing, movement is instructed along path "4" in the figure to retrieve the finished workpiece (step 6). In this example, this operation is also performed with speed and positional synchronization, so that the movement commences when the crank angle has reached the 190° position (just past bottom dead centre), and precedes at synchronized speed F10. In step 7, the workpiece is clamped, and in step 8, travel along path "5" is instructed, at synchronized speed F20, to deliver the workpiece to the carry-out conveyor. Finally, in steps 9 - 11, the workpiece is unclamped, releasing the workpiece, the arm moves to the left at high speed back to the start position, and the program loops back (M99) to the start position (step 1).

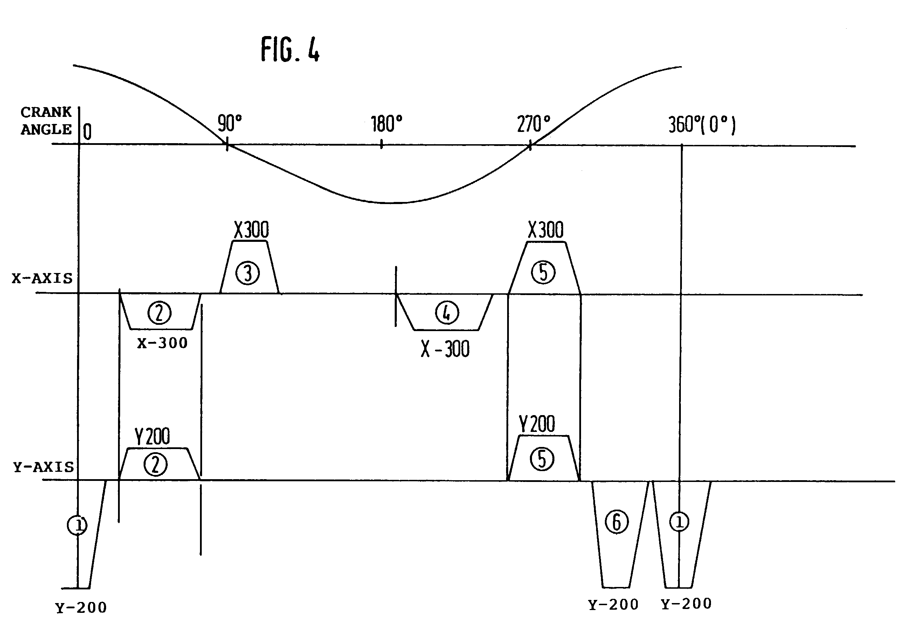

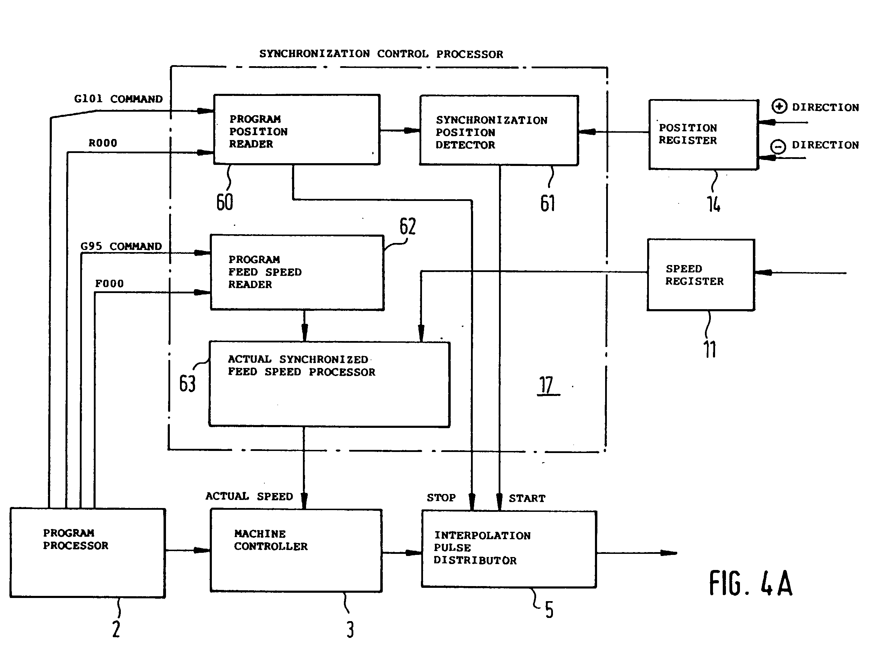

The "synchronized speeds" referred to above may be explained as follows. The number which follows "F" in the speed instruction indicates the amount of X-Y plane travel per unit pulse of the detector 10, in millimetres. Therefore, the "F10" instruction sets the arm movement speed at 10mm per pulse of the detector 10. Since each detector pulse corresponds to a certain angular movement of the crank, the speed of the arm is synchronized with the speed of the crank, and thus the movement of the die. Figure 4 shows the X/Y axis movement of the numerically controlled arm, in synchronization with the angular position of the crank, for the command sequence of Figure 3.

In Figure 4, the circled numbers correspond to the movements indicated in Figure 3. By way of example, it can be seen from Figure 4 that movement along path "4" (corresponding to step 6 in Figure 3) is begun at a point corresponding to a crank position of 190°. Only an X-axis movement is shown here because step 6 involves only X-axis movement. This movement is followed in Figure 4 by joint X and Y axis movement along path 5, as instructed by step 8 of the program of Figure 3. This is followed by movement along path "6", in the "Y" direction only, as commanded by step 10 of the program. It will be noted from Figure 4 that the sped of movement of step 6 is greater than that of steps 4 or 5 (the height of the trapeziod is indicative of speed) because the step 6 command is a high speed traverse (G00). The movement designators are trapeziodal in Figure 4 to illustrate the acceleration and deceleration at the beginning and the end of each movement.

Figure 4A illustrates the synchronization control processor ("SCP") 17 in greater detail. This device is responsible for acting on the synchronization commands in the user program to coordinate the synchronization function. The SCP includes a programmed position reader 60 which detects a G101 (position synchronization) instruction from the program processor 2, and reads the designated position value (contained in the "R" instruction of the program) and stops operation of the interpolation pulse distributor 5 in response. This latter action prevents the current command block (X-Y movement) from being executed immediately. A synchronization position detector 61 reads the current position of the crank 21 from the position register 14, and operates to start the interpolation pulse distributor 5 when the position read from register 14 corresponds to the program-designated position value, so that the distributor 5 is instructed to execute the command block. It is thus possible to start the carry-in operation or the carry-out operation immediately once the crank angle of the press corresponds to the program commanded synchronous position.

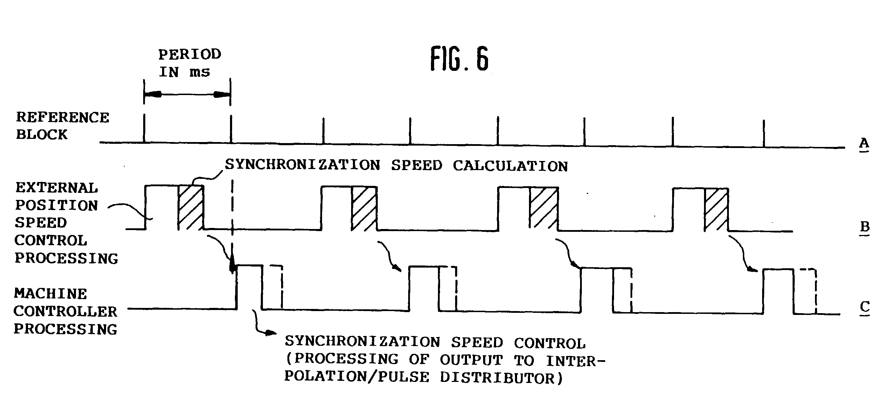

A programmed feed speed reader 62 reads the programmed synchronization feed speed ( from the "F" instruction in the program) in response to a G95 (speed synchronization) command, and starts the operation of a processor 63 which will calculate the actual feed speed of the arm from the "F" value and the current speed of the crank, the latter being read from register 11. The calculated value is then sent to the machine controller 3. Reading and computation take place within a very short interval (indicated in Figure 6) so that speed control will closely follow fluctuations in the speed of the external apparatus, here, the crank speed.

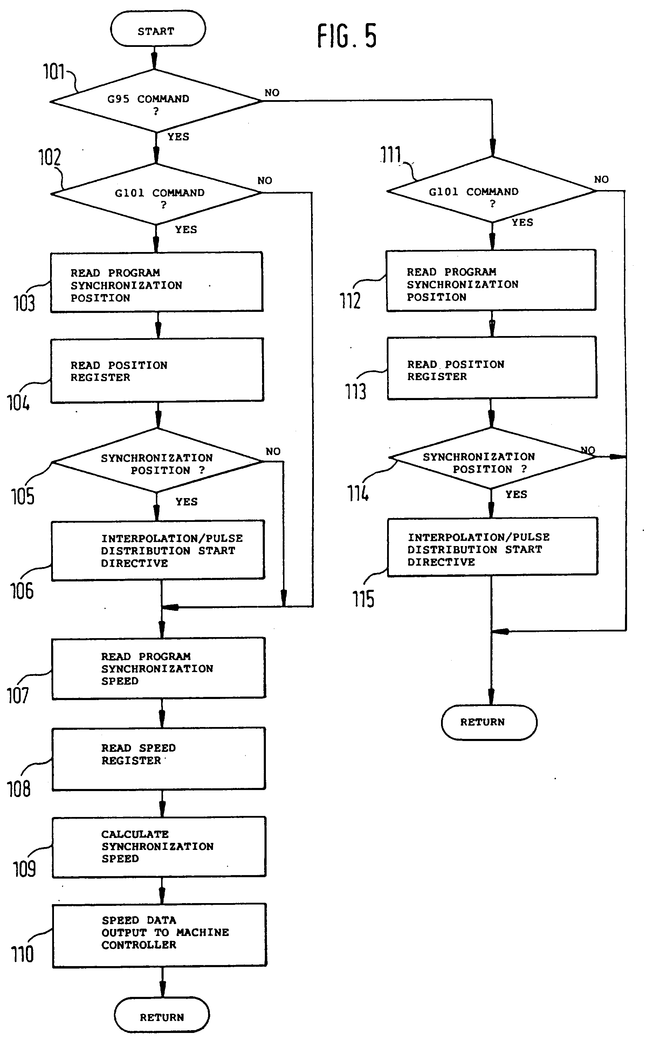

Figure 5 is a flowchart illustrating the operation of the synchronization control processor 17 in effecting the above described functions. Processing of an external position/speed control routine, for implementing the synchronization commands (G95, G101) provided by the program processor 2, is performed at a predetermined interval of several milliseconds. In the absence of a speed synchronization command G95 at step 101, processing is carried out to determine the presence of a position synchronization command (G101) at step 111. If neither is present, the routine repeats. Assuming command 101 is present, the synchronization position data specified by the program (in the "R" instruction) and present position data stored in position register 14 are read at steps 112, 113. The present position is updated every cycle and is used for a determination of whether the synchronization position has been reached at step 114, If the data obtained does not indicate that the crank 21 is at the synchronization position, implementation is held off and the flow is repeated. When the data indicates that the crank is at the synchronization position, a start command is given to the interpolation/pulse distributor 5 at step 115, and position synchronization is thus carried out.

If there is a synchronization speed command (G95), the flow proceeds from step 101 to step 102, where the presence of the position synchronization command G101 is determined. If the G101 command is not present, the program proceeds to step 107 where the programmed synchronization speed is read ( from the "F" instruction), followed by a reading of the crank speed data stored in speed register 11. The correct arm speed is calculated by the processor 63 in step 109 using the read crank speed value and the mm/pulse value obtained from the "F" instruction, and the speed data is output to the machine controller 3 in step 110. This speed value will be valid until the next loop through the program, at which time a new speed value may be calculated, depending on the detected speed of the crank at that time.

In the event that a position synchronization command G101 is present in addition to a speed synchronization command G95, the program proceeds from step 102 to step 103, where the synchronization position is read, followed by step 104 where the position register 14 is read. At step 105, the processor determines whether the synchronization position has been reached. If not, the program proceeds to step 107 for calculation of the speed data. The programmed synchronization speed will be read (step 107), the speed register read (step 108), and the synchronization speed of the arm will be calculated (step 109) with the speed data being output to the machine controller at step 110. If the synchronization position has been reached at step 105, the interpolation/pulse distribution circuit 5 will receive a START directive from processor 17 to start the operation of the servo amplifiers at step 106, prior to proceeding to speed calculation and control steps 107-110.

In short, the synchronization speed is calculated and output to the machine controller every cycle so long as a speed synchronization command G95 is present, but the position synchronization operation proceeds only when the crank is at the synchronization position. When both position and speed synchronization control are conducted, the processing of both is executed in one cycle, following the left side of the Fig. 5 flowchart.

Figure 6 is a processing timing chart illustrating the speed synchronization of the synchronization control processor 17 and the machine controller 3.

The figure shows the timing involved in reading the position information stored in the register 11 and/or 14 and then performing processing based on the read data. A reference timing block is shown in line A, the period of which is generally less than 20ms. External position and/or speed reading/processing is conducted starting at the beginning of one reference block as shown in line B. During a portion of the reference block, a speed synchronization operation/calculation is conducted, as indicated by the hatched block portion. Following termination of that operation, the machine controller receives the output data and conducts a speed synchronization control operation in which a calculated value is output to the interpolation/pulse distributor 5, as seen in time line C, starting at the beginning of the next reference block.

It will be appreciated that instead of commanding only a start position for the position synchronization control as in the foregoing embodiment, both start position and a stop position may be indicated in the control program and these positions may be discriminated by the synchronization control processor 17.

It will further be appreciated that a start may be effected at any time, as necessary, and only the stop position need be synchronized with the external position.

It will further be appreciated that in addition to the aforementioned start/stop control by position synchronization, the external position data and a numerically controlled coordinate position may be overlapped with each other to enable more fine control.

It will be apparent that the invention, as described above, permits a numerical control unit to provide of speed synchronization control, position synchronization control and speed/position synchronization control with a driven object, particularly a machine element operating in a control system other then that which is numerically controlled.

It also will be apparent that the external system need not be limited to a system operating on a workpiece, but may comprise any second machine operative with the numerically controlled system.

## Claims

1. A numerical controller operative in response to control program commands for controlling movement of a first device (19) in synchronism with a second device (9) not controlled by said numerical controller, said controller comprising means (10) for detecting the speed and position of at least one element (20, 21) of the second device (9);
means (3, 5) for controlling the speed and position of at least one element of the first device (19) in synchronism with said at least one element (20, 21) of the second device (9);
characterized in that said controller further comprises:
speed and position information storing means (11, 14) for storing the detected speed and position of said element (20, 21) of the second device (9);
means (17) for processing speed and position synchronization commands (G95, G101) from a control program (1);
wherein said processing means (17) comprises a synchronization position detector (61) adapted, upon receipt of a position synchronization command (G101), to read the current position of said element (20, 21) from said position information storing means (14) and to start said position controlling means (5) when the current position corresponds to a program-designated value, and
wherein said processing means (17) further comprises an actual feed speed processor (63) adapted, upon receipt of a speed synchronization command (G95), to read the current speed of said element (20, 21) from said speed information storing means (11) and to calculate the actual desired speed of the at least one element of the first device (19) from a program-designated speed (F) and said current speed, said actual feed speed processor (63) adapted to transmit the calculated actual speed to said speed controlling means (3).

2. A controller as claimed in claim 1, characterized in that said means (10) for detecting the speed and position of at least one element (21) of the second device (9) is adapted to output signals to the position and speed information storing means (11, 14).

3. A controller as claimed in claim 2, characterized in that the detecting means (10) are adapted to determine the relative direction of movement of the element (21) of the second device (9).

4. A controller as claimed in claim 2 or 3, characterized in that the position and speed information storing means (11, 14) are responsive to pulses and in that the detecting means (10) comprises a pulse generator responsive to the movememt of the element (21) of said second device (9).

5. A controller as claimed in any one of claims 1 to 4, characterized in that the position information storing means (14) is selectively resettable at a reference position.

## Patentansprüche

1. Numerische Steuerung, die in Abhängigkeit von Steuerprogrammbefehlen betätigbar ist, um die Bewegung einer ersten Vorrichtung (19) synchron mit einer zweiten Vorrichtung (9) zu steuern, die nicht von der numerischen Steuerung gesteuert wird, wobei die Steuerung eine Einrichtung (10) zum Erfassen der Geschwindigkeit und der Position wenigstens eines Elements (20, 21) der zweiten Vorrichtung (9) aufweist; sowie eine Einrichtung (3, 5) aufweist zum Steuern der Geschwindigkeit und der Position wenigstens eines Elements der ersten Vorrichtung (19) synchron mit dem wenigstens einen Element (20, 21) der zweiten Vorrichtung (9);
dadurch gekennzeichnet,
daß die Steuerung ferner folgendes aufweist:
eine Geschwindigkeits- und eine Positions-Informationsspeichereinrichtung (11, 14) zum Speichern der erfaßten Geschwindigkeit und Position des Elements (20, 21) der zweiten Vorrichtung (9);
eine Einrichtung (17) zum Verarbeiten von Geschwindigkeits- und Positions-Synchronisationsbefehlen (G95, G101) von einem Steuerprogramm (1);
wobei die Verarbeitungseinrichtung (17) einen Synchronisations-Positionsdetektor (61) aufweist, der dazu ausgelegt ist, bei Empfang eines Positions-Synchronisationsbefehls (G101) die derzeitige Position des Elements (20, 21) aus der Positions-Informationsspeichereinrichtung (14) auszulesen und die Positionssteuereinrichtung (5) dann zu starten, wenn die derzeitige Position einem im Programm bezeichneten Wert entspricht, und
wobei die Verarbeitungseinrichtung (17) ferner einen Prozessor (63) für die tatsächliche Vorschubgeschwindigkeit aufweist, der dazu ausgelegt ist, bei Empfang eines Geschwindigkeits-Synchronisationsbefehls (G95) die derzeitige Geschwindigkeit des Elements (20, 21) aus der Geschwindigkeits-Informationsspeichereinrichtung (11) auszulesen sowie die tatsächliche, gewünschte Geschwindigkeit des wenigstens einen Elements der ersten Vorrichtung (19) aus einer im Programm bezeichneten Geschwindigkeit (F) sowie der derzeitigen Geschwindigkeit zu berechnen, wobei der Prozessor (63) für die tatsächliche Vorschubgeschwindigkeit dazu ausgelegt ist, die berechnete tatsächliche Geschwindigkeit an die Geschwindigkeitssteuereinrichtung (3) zu übermitteln.

2. Steuerung nach Anspruch 1,
dadurch gekennzeichnet,
daß die Einrichtung (10) zum Erfassen der Geschwindigkeit und der Position wenigstens eines Elements (21) der zweiten Vorrichtung (9) dazu ausgelegt ist, Signale an die Positions- und die Geschwindigkeits-Informationsspeichereinrichtung (11, 14) abzugeben.

3. Steuerung nach Anspruch 2,
dadurch gekennzeichnet,
daß die Erfassungseinrichtung (10) zum Bestimmen der relativen Bewegungsrichtung des Elements (21) der zweiten Vorrichtung (9) ausgelegt ist.

4. Steuerung nach Anspruch 2 oder 3,
dadurch gekennzeichnet,
daß die Positions- und Geschwindigkeits-Informationsspeichereinrichtungen (11, 14) auf Impulse ansprechen und daß die Erfassungseinrichtung (10) einen Impulsgenerator aufweist, der auf die Bewegung des Elements (21) der zweiten Vorrichtung (9) anspricht.

5. Steuerung nach einem der Ansprüche 1 bis 4,
dadurch gekennzeichnet,
daß die Positions-Informationsspeichereinrichtung (14) zu einer Bezugsposition selektiv rückstellbar ist.

## Revendications

1. Dispositif de commande numérique susceptible de fonctionner en réponse aux instructions d'un programme de commande afin de commander le mouvement d'un premier appareil (19) en synchronisme avec un second appareil (9) qui n'est pas commandé par ledit dispositif de commande numérique, ledit dispositif de commande comprenant des moyens (10) pour détecter la vitesse et la position d'au moins un élément (20, 21) dudit second appareil (9);
des moyens (3, 5) pour commander la vitesse et la position d'au moins un élément du premier appareil (19) en synchronisme avec ledit au moins un élément (20, 21) du second appareil (9);
caractérisé en ce que ledit dispositif de commande comprend en outre:
des moyens de stockage d'informations de vitesse et de position (11, 14) pour stocker la vitesse et la position détectées dudit élément (20, 21) du second appareil (9);
des moyens (17) pour traiter les instructions de synchronisation de vitesse et de position (G95, G101) depuis un programme de commande (1) ;
dans lequel lesdits moyens de traitement (17) comprennent un détecteur de position de synchronisation (61), adapté à lire, suite à la réception d'un ordre de synchronisation de position (G101), la position courante dudit élément (20, 21) depuis lesdits moyens de stockage d'informations de position (14), et à démarrer lesdits moyens de commande de position (5) lorsque la position courante correspond à une valeur désignée par le programme, et
dans lequel lesdits moyens de traitement (17) comprennent en outre un processeur de vitesse d'avance réelle (63) adapté, lorsqu'il reçoit un ordre de synchronisation de vitesse (G95), à lire la vitesse courante dudit élément (20, 21) depuis lesdits moyens de stockage d'informations de vitesse (11), et à calculer la vitesse réelle désirée dudit au moins un élément du premier appareil (19) à partir d'une vitesse désignée par le programme (F) et de ladite vitesse courante, ledit processeur de vitesse d'avance réelle (63) étant adapté à transmettre la vitesse réelle calculée auxdits moyens de commande de vitesse (3).

2. Dispositif de commande selon la revendication 1,
caractérisé en ce que lesdits moyens (10) pour détecter la vitesse et la position dudit au moins un élément (21) du second appareil (9) sont adaptés à délivrer des signaux vers les moyens de stockage d'informations de position et de vitesse (11, 14).

3. Dispositif de commande selon la revendication 2,
caractérisé en ce que les moyens de détection (10) sont adaptés à déterminer la direction relative du mouvement de l'élément (21) du second appareil (9).

4. Dispositif de commande selon l'une ou l'autre des revendications 2 et 3,
caractérisé en ce que les moyens de stockage d'informations de position et de vitesse (11, 14) réagissent à des impulsions, et en ce que les moyens de détection (10) comprennent un générateur d'impulsions qui réagit au mouvement de l'élément (21) dudit second appareil (9).

5. Dispositif de commande selon l'une quelconque des revendications 1 à 4,
caractérisé en ce que les moyens de stockage d'informations de position (14) peuvent être remis de façon sélective à une position de référence.
